# EUROPÄISCHE PATENTSCHRIFT

(11) **EP 3 463 695 B1**
(45) Veröffentlichungstag und Bekanntmachung des Hinweises auf die Patenterteilung: **08.04.2020**
(21) Anmeldenummer: 17722703.0
(22) Anmeldetag: 26.04.2017
(51) Int. Cl.: B07C 5/34, G01M 3/32, G01M 3/38, G01N 21/90, G01M 3/22

(54) **VORRICHTUNG UND VERFAHREN ZUR INSPEKTION VON BEHÄLTNISSEN**
DEVICE AND METHOD FOR INSPECTING CONTAINERS
DISPOSITIF ET PROCÉDÉ D'INSPECTION DE RÉCIPIENTS

(30) Priorität: 02.06.2016 DE 102016209710
(43) Veröffentlichungstag der Anmeldung: 10.04.2019
(73) Patentinhaber: Robert Bosch GmbH, 70442 Stuttgart (DE)
(72) Erfinder: BAUER, Erich, 74564 Crailsheim (DE)
(74) Vertreter: DREISS Patentanwälte PartG mbB
(86) Internationale Anmeldenummer: PCT/EP2017/059911
(87) Internationale Veröffentlichungsnummer: WO 2017/207177

(56) Entgegenhaltungen:
- DE-A1- 1 573 478
- US-B2- 7 560 720

## Beschreibung

Die Erfindung geht aus von einer Vorrichtung und einem Verfahren zur Inspektion von Behältnissen nach der Gattung der unabhängigen Ansprüche. Eine gattungsgemäße Vorrichtung ist bekannt aus der US 7,560,720 B2. Dort werden Behältnisse über eine Zuführung und eine Transportschnecke unterschiedlichen Transporträdern zugeführt. Im Falle einer erneuten Inspektion muss jedoch die Zuführschnecke angehalten werden, damit das erneut zu inspizierende Behältnis dem Inspektionsrad zugeführt werden kann. Dadurch entsteht im Durchtransport eine Lücke.

Vorrichtungen mit zusätzlichen Transportschnecken sind relativ aufwendig. Außerdem tritt ein erhöhter Verschleiß auf durch ständiges Starten bzw. Stoppen der Transportschnecke.

Der Erfindung liegt die Aufgabe zugrunde, genannte Nachteile zu eliminieren bzw. zu reduzieren. Diese Aufgabe wird gelöst durch die Merkmale der unabhängigen Ansprüche.

### Vorteile der Erfindung

Die erfindungsgemäße Vorrichtung und das erfindungsgemäße Verfahren zur Inspektion von Behältnissen gemäß den Merkmalen der unabhängigen Ansprüche haben demgegenüber den Vorteil, dass im Falle einer erneuten Inspektion eine Lücke geschaffen wird, ohne den Einlauf zu stoppen. Weiterhin kann auf Transportschnecken verzichtet werden. Außerdem wird der Verschleiß reduziert, da nun ein kontinuierlicher Betrieb möglich ist. Dies wird erfindungsgemäß dadurch erreicht, dass zur Entnahme aus der Zuführung ein kontinuierlich bewegbares Rad verwendet ist. Dieses Rad übergibt zu inspizierende Behältnisse an ein weiteres Rad, nämlich ein Zuführrad zur Zuführung zu einem Inspektionsmodul. Diesem weiteren Rad können erneut zu inspizierende Behältnisse ebenfalls zugeführt werden über ein weiteres Rad. Im Falle einer erneuten Inspektion gelangen die erneut zu inspizierenden Behältnisse an das Zuführrad. Dabei wird eine Zuführung von dem ersten Rad an das Zuführrad unterbunden. Vielmehr verbleibt ein bereits entnommenes Behältnis in dem ersten Rad und wird nochmals durch den Stau an der Zuführung bzw. dem Einlaufband vorbei eine Umdrehung später an das Zuführrad übergeben. Jedoch wird das erste Rad hierbei nicht angehalten. Durch den kontinuierlichen Betrieb wird eine verschleißarme Betriebsart möglich.

In einer zweckmäßigen Weiterbildung ist vorgesehen, dass in dem ersten Rad eine Vorinspektion vollzogen wird. Damit können bereits im Vorfeld eventuell beschädigte Behältnisse rechtzeitig aussortiert werden, ohne dass diese dem Inspektionsmodul zugeführt werden müssen. Dadurch erhöht sich die Sicherheit der Inspektion.

In einer zweckmäßigen Weiterbildung ist als Zuführung ein Transportband vorgesehen. Dieses Transportband kann kontinuierlich eine große Zahl zu inspizierender Behältnisse zuführen und damit auch eventuelle Schwankungen leichter ausgleichen. Zur Entnahme der zugeführten Behältnisse von der Zuführung ist das erste Rad vorgesehen. Das erste Rad befüllt jede leere Aufnahmestelle mit Behältnissen. Dadurch wird es möglich, dass im Falle erneut zu inspizierender Behältnisse in dem ersten Rad Behältnisse wieder an eine Entnahmestelle zurückgeführt werden können, ohne dass dabei die Zuführung angehalten werden müsste.

In einer zweckmäßigen Weiterbildung ist vorgesehen, dass die Übergabe von erneut zu inspizierenden Behältnissen an das Zuführrad vorrangig ist gegenüber einer Zuführung von Behältnissen von dem ersten Rad an das Zuführrad. Damit kommt es zum einen zu einer schnellen erneuten Inspektion. Auf der anderen Seite werden die Behältnisse in der Zuführung besonders einfach gepuffert. Weitere zweckmäßige Weiterbildungen ergeben sich aus weiteren abhängigen Ansprüchen und der Beschreibung.

### Zeichnung

Ein Ausführungsbeispiel der Vorrichtung und des Verfahrens zur Inspektion von Behältnissen ist in der Zeichnung dargestellt und wird nachfolgend näher beschrieben.

Es zeigen:
die Figur 1 eine schematische Draufsicht auf die Vorrichtung sowie
die Figur 2 ein Ablaufdiagramm eines zugehörigen Verfahrens.

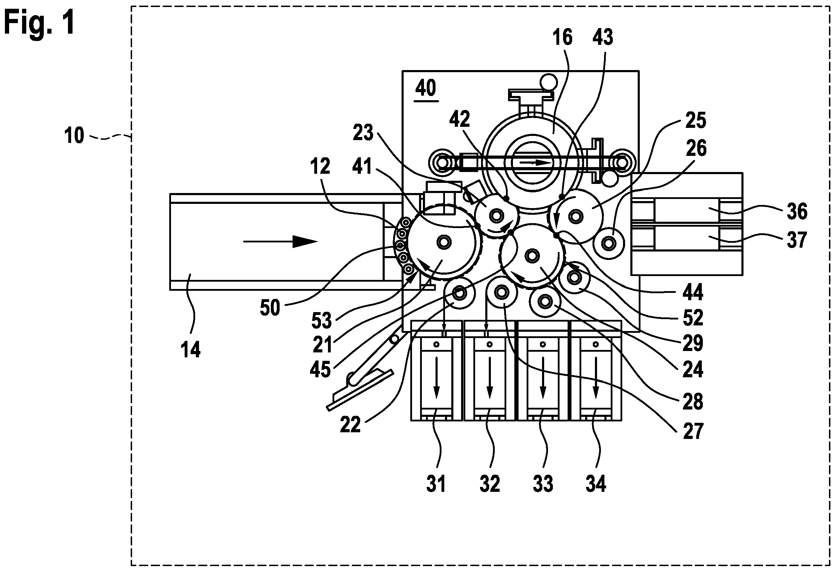

In Figur 1 ist eine Vorrichtung zur Inspektion von Behältnissen 12 gezeigt. Diese Vorrichtung 10 umfasst zumindest eine Zuführung 14, über die die zu inspizierenden Behältnisse 12 zugeführt werden. Bei der Zuführung 14 handelt es sich beispielsweise um ein Zuführband, welches kontinuierlich genügend Behältnisse 12 in den Erfassungsbereich des ersten Rades 21 bringt. Die Behältnisse 12 sind schematisch in der Draufsicht gezeigt. Bei den Behältnissen 12 kann es sich beispielsweise um pharmazeutische Behältnisse handeln wie beispielsweise Ampullen, Vials, Flaschen, Karpulen oder Spritzen. Prinzipiell sind jedoch auch andere Behältnisse 12 möglich. Die Behältnisse 12 gelangen jeweils einzeln an ein erstes Rad 21, das als Transportrad und/oder Inspektionsrad für die Behältnisse 12 dient. Das erste Rad 21 rotiert entsprechend der Pfeilrichtung kontinuierlich und bewegt die entnommenen Behältnisse 12 zumindest bis zu einem ersten Übergabepunkt 41. Schematisch ist ein Entnahmepunkt 50 eingezeichnet, an dem die über die Zuführung 14 zugeführten Behältnisse 12 in leere Transportstellen des ersten Rads 21 überführt werden. Über einen ersten Transportpfad 51, angedeutet durch eine durchgezogene Linie, gelangen die transportierten Behältnisse 12 über einen ersten Übergabepunkt 41 an ein drittes Rad 23. Das dritte Rad 23 bewegt sich entgegen der Drehrichtung des ersten Rads 21, beispielsweise entgegen dem Uhrzeigersinn. Das dritte Rad 23 fungiert als Zuführrad der von dem ersten Rad 21 übergebenen Behältnisse 12 für ein Inspektionsmodul 16. Auch das Inspektionsmodul 16 ist zylinderförmig ausgebildet und dreht sich im Ausführungsbeispiel im Uhrzeigersinn wie mit dem entsprechenden Pfeil angedeutet. In dem Inspektionsmodul 16 erfolgt die Überprüfung der zugeführten Behältnisse 12. Beispielsweise wird die Dichtigkeit der Behältnisse 12 überprüft, in denen zuvor ein entsprechendes Produkt wie beispielsweise flüssige oder feste Pharmazeutika abgefüllt wurden. Diese Dichtigkeitsprüfung könnte beispielsweise mittels Hochspannung erfolgen. Auch über eine visuelle Inspektion, beispielsweise in Verbindung mit einer CMOS-Kamera mit Hochgeschwindigkeitsschnittstelle, kann sowohl eine Partikel- als auch eine kosmetische Inspektion erfolgen. Alternativ könnte auch eine sogenannte Headspace-Dichtigkeitsprüfung erfolgen, indem das absorbierte Licht, das den Kopfraum der zu inspizierenden Behältnisse 12 durchdringt, mittels Laserspektroskopie gemessen wird. Hierbei wird beispielsweise die Dichtigkeit des Verschlusses überprüft. Das Inspektionsmodul 16 bewegt die Behältnisse 12 im Uhrzeigersinn zumindest von der zweiten Entnahmestelle 42 bis zur dritten Entnahmestelle 43 zur Übergabe an ein fünftes Rad 25.

Die inspizierten Behältnisse 12 werden über das fünfte Rad 25 von dem Inspektionsmodul 16 entnommen. Das fünfte Rad 25 hat die Möglichkeit, die inspizierten Behältnisse 12 über einen vierten Übergabepunkt 44 an ein viertes Rad 24 zu übergeben. Alternativ können die Behältnisse 12 auch von dem fünften Rad 25 an ein sechstes Rad 26 gelangen. Das vierte Rad 24 bewegt sich in entgegengesetzter Richtung wie das fünfte Rad 25, im Ausführungsbeispiel im Uhrzeigersinn. Das vierte Rad 24 weist zahlreiche Übergabepunkte auf. So können in dem vierten Rad 24 transportierte Behältnisse 12 in ein siebtes Rad 27 und/oder in ein achtes Rad 28 und/oder in ein neuntes Rad 29 übergeben werden. Weiterhin besteht die Möglichkeit, dass in dem vierten Rad 24 transportierte Behältnisse 12 in einem fünften Übergabepunkt 45 wieder zurück in das dritte Rad 23 gelangen. Das erste Rad 21 weist darüber hinaus einen nicht näher bezeichneten Übergabepunkt zu einem zweiten Rad 22 auf. Die Räder 22, 25, 26, 27, 28, 29 dienen dem Ausschleusen bereits inspizierter Behältnisse 12 in bereit stehende Ablagen 31 bis 37. Je nach detektiertem Zustand des Behältnisses 12 können unterschiedliche Ablagen 31 bis 37 mit den zugehörigen Transporträdern 22, 25, 26, 27, 28, 29 angesteuert werden.

In Figur 1 ist zudem ein zweiter Transportpfad 52 gestrichelt eingezeichnet. Über den zweiten Transportpfad 52 gelangen erneut zu inspizierende Behältnisse 12 von dem Inspektionsmodul 16 zur erneuten Prüfung an dasselbe Inspektionsmodul 16. Hierzu gelangen die Behältnisse 12 in dem Übergabepunkt 43 von dem Inspektionsmodul 16 in das fünfte Rad 25, von dort nach Übergabe in dem Übergabepunkt 44 in das vierte Rad 24, von dort nach Übergabe in dem fünften Übergabepunkt 45 in das dritte Rad 23 und von dort zurück in das Inspektionsmodul 16 in dem Übergabepunkt 42.

Um eine Leerstelle für das erneut zu inspizierende Behältnis 12 in dem dritten Rad 23 zu schaffen, erfolgt nun an geeigneter Stelle keine Übergabe von dem ersten Rad 21 an das dritte Rad 23 in dem ersten Übergabepunkt 41. Vielmehr gelangt das im ersten Rad 21 an der ersten Übergabestelle 41 befindliche Behältnis 12 wieder zurück in den Bereich der Zuführung 14 wie mit dem dritten Transportpfad 53 angedeutet. Da nun dieses Behältnis 12 die entsprechende Stelle in dem ersten Rad 21 belegt, kann nun an dieser Stelle kein neues Behältnis 12 von der Zuführung 14 an das erste Rad 21 gelangen. Nachdem das erneut zu inspizierende Behältnis 12 von dem vierten Rad 24 in das dritte Rad 23 in diese Leerstelle eingeschleust wurde, gelangen an die nachfolgende Stelle des dritten Rades 23 wieder solche Behältnisse 12, die über das erste Rad 21 zugeführt wurden.

In dem ersten Transportrad 21 kann optional zugleich eine Vorinspektion durchgeführt werden. Lediglich für gut befundene Behältnisse 12 gelangen überhaupt erst in das dritte Rad 23. Ansonsten erfolgt die Ausschleusung über das zweite Rad 22 in die erste Ablage 31.

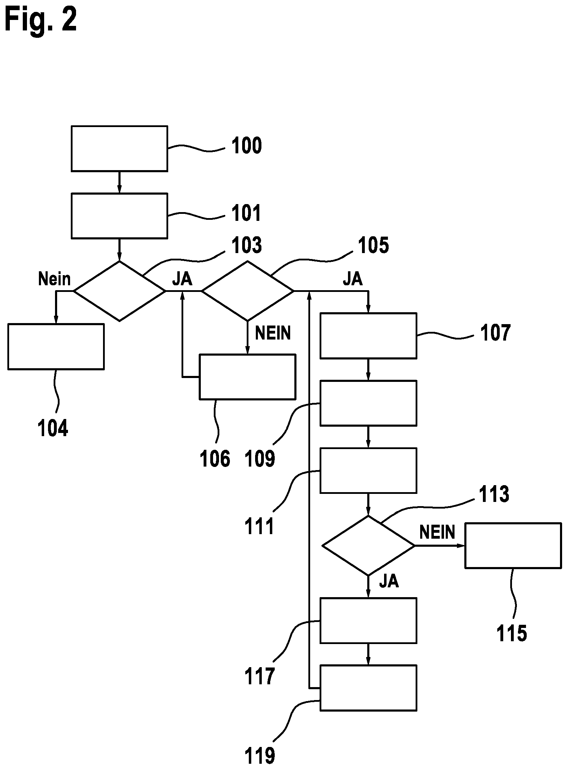

Eine Steuerung 40 steuert die in Figur 1 gezeigte Vorrichtung 10 gemäß dem Flussdiagramm nach Figur 2. So erfolgt in einem Schritt 100 eine kontinuierliche Zuführung der Behältnisse 12 von der Zuführung 14 an das erste Rad 21, jedoch nur an leeren Stellen. In dem ersten Rad 21 findet eine Vorinspektion gemäß Schritt 101 statt. Die Steuerung 40 erkennt, ob das Behältnis 12 in der Vorinspektion als ordnungsgemäß eingestuft wurde, Abfrage 103. Bei einem ordnungsgemäßen Behältnis 12 schließt sich eine Abfrage 105 an. Diese beinhaltet, ob eine Leerstelle für ein erneut zu inspizierendes Behältnis 12 in dem dritten Rad 23 erzeugt werden muss oder nicht. Hat also das vierte Rad 24 ein erneut zu inspizierendes Behältnis 12 an das dritte Rad 23 übergeben, verbleibt das entsprechende Behältnis 12 im ersten Rad 21. Das verbleibende Behältnis 12 wird über den dritten Transportpfad 53 nach zumindest einer weiteren Umdrehung erst später dem dritten Rad 23 zugeführt, Schritt 106. Die Übergabe gemäß Schritt 107 in dem ersten Übergabepunkt 41 von dem ersten Rad 21 an das dritte Rad 23 erfolgt somit nur, wenn keine Leerstelle generiert werden muss, Abfrage 105. Anschließend gelangt das zu inspizierende Behältnis 12 von dem dritten Rad 23 an das Inspektionsmodul 16 über den zweiten Übergabepunkt 42, Schritt 109. Anschließend wird das Behältnis 12 in dem Inspektionsmodul 16 inspiziert, Schritt 111. Wird anschließend von der Steuerung 14 darauf erkannt, dass das Ergebnis nicht eindeutig ist, also eine erneute Inspektion erfolgen soll, Abfrage 113, gelangt das erneut zu inspizierende Behältnis 12 gemäß Schritt 117 in das fünfte Transportrad 25. Andernfalls erfolgt das Ausschleusen (Schritt 115) des inspizierten Behältnisses 12, was gegebenenfalls ebenfalls über das fünfte Transportrad 25 erfolgen kann. Bei dem Schritt 115 des Ausschleusens gelangt das Behältnis 12 je nach Inspektionsergebnis in eine der Ablagen 31 bis 37. Das erneut zu inspizierende Behältnis 12 gelangt anschließend vom fünften Rad 25 an das vierte Rad 24, Schritt 119 sowie erneut an das dritte Rad 23, Schritt 107. Wie bereits beschrieben schließen sich daran die nachfolgenden Schritte 109 bis 115 an.

Prinzipiell könnte die Anordnung der Räder 21, 23, 24, 25 in einer anderen Art und Weise erfolgen oder es könnten alternativ noch weitere Räder, die dazwischen liegen, vorgesehen werden. Wesentlich jedoch ist, dass eine kontinuierliche Bewegung des ersten Rads 21 weiterhin erfolgen kann, selbst in dem Fall, dass in dem Zuführrad 23 Leerstellen für erneut zu inspizierende Behältnisse 12 geschaffen werden müssen. Notwendig hierfür ist, dass die Steuerung 40 zum einen sicher die Position eines erneut zu inspizierenden Behältnisses 12 bezogen auf den ersten Übergabepunkt 41 kennt. Entsprechend muss die Steuerung 40 die Übergabe in dem ersten Übergabepunkt 41 von dem ersten Rad 21 zu dem dritten Rad 23 steuern. Zur Erzeugung einer Leerstelle muss das noch nicht inspizierte Behältnis 12 in dem ersten Rad 21 verbleiben und darf nicht an das dritte Rad 23 übergeben werden. Hierzu sind entsprechend Befestigungs- bzw. Haltemechanismen am Rad 21 so anzusteuern, dass diese nicht geöffnet werden. Außerdem sind die Haltemechanismen am dritten Rad 23 so anzusteuern, dass diese nicht eine Entnahme im ersten Übergabepunkt 41 erzielen würden, sondern eine Übernahme des erneut zu inspizierenden Behältnisses 12 an dem fünften Übergabepunkt 45.

Die Vorrichtung und das Verfahren zur Inspektion von Behältnissen 12 eignet sich insbesondere in der pharmazeutischen Industrie zur Inspektion von in Behältnissen 12 abgefüllten flüssigen oder festen Pharmazeutika. Die Verwendung ist jedoch hierauf nicht eingeschränkt. Auch andere in Behältnissen 12 wie Verpackungsbeuteln, Schlauchbeuteln, Kartons oder ähnliches verpackte Produkte wie beispielsweise Lebensmittel etc. könnten in der beschriebenen Vorrichtung 10 und mit dem beschriebenen Verfahren inspiziert werden.

## Patentansprüche

1. Vorrichtung zur Inspektion von Behältnissen (12), umfassend zumindest ein Inspektionsmodul (16) zur Inspektion von Behältnissen (12), zumindest eine Zuführung (14) für die zu inspizierenden Behältnisse (12), zumindest ein erstes Rad (21) zur Entnahme und Weitertransport der von der Zuführung (14) zugeführten Behältnisse (12), zumindest ein weiteres Rad (23) zur Zuführung der Behältnisse (12) zu dem Inspektionsmodul (16), wobei das erste Rad (21) Behältnisse (12) dem weiteren Rad (23) zuführt, **dadurch gekennzeichnet, dass** zumindest eine Steuerung (40) vorgesehen ist, die eine Übergabe zumindest eines Behältnisses (12) von dem ersten Rad (21) zu dem weiteren Rad (23) in einem Übergabepunkt (41) so steuert, dass im Falle eines erneut zu inspizierenden Behältnisses (12) zumindest einmal eine Übergabe eines Behältnisses (12) von dem ersten Rad (21) zu dem weiteren Rad (23) unterbleibt.

2. Vorrichtung nach Anspruch 1, **dadurch gekennzeichnet, dass** ein erneut zu inspizierendes Behältnis (12) von dem Inspektionsmodul (16) über zumindest ein weiteres Rad (24, 25) dem weiteren Rad (23) zugeführt ist.

3. Vorrichtung nach einem der vorhergehenden Ansprüche, **dadurch gekennzeichnet, dass** in dem ersten Rad (21) eine Vorinspektion erfolgt.

4. Vorrichtung nach einem der vorhergehenden Ansprüche, **dadurch gekennzeichnet, dass** die Steuerung (40) die Entnahme zugeführter Behältnisse (12) von der Zuführung (14) derart steuert, dass eine Entnahme zumindest eines Behältnisses (12) unterbleibt, wenn zuvor eine Übergabe zumindest ein Behältnis (12) an das weitere Rad (23) unterblieb.

5. Verfahren zur Inspektion von Behältnissen (12), wobei eine Zuführung (14) Behältnisse (12) einem ersten Rad (21) zuführt, wobei das erste Rad (21) vorzugsweise kontinuierlich bewegt wird und entnommene Behältnisse (12) einem weiteren Rad (23) zuführt, welches die zugeführten Behältnisse (12) an ein Inspektionsmodul (16) abgibt, das Behältnisse (12) inspiziert, **dadurch gekennzeichnet, dass** im Falle einer erneuten Inspektion eines schon inspizierten Behältnisses (12) eine Übergabe von dem ersten Rad (21) an das weitere Rad (23) unterbleibt, um zumindest eine Leerstelle für das erneut zu inspizierende Behältnis (12) zu schaffen.

6. Verfahren nach dem vorhergehenden Verfahrensanspruch, **dadurch gekennzeichnet, dass** in dem ersten Rad (21) eine Vorinspektion erfolgt und/oder eine Übergabe an das weitere Rad (23) abhängig von der Vorinspektion durchgeführt wird.

7. Verfahren nach einem der vorhergehenden Verfahrensansprüche, **dadurch gekennzeichnet, dass** ein erneut zu inspizierendes Behältnis (12) von dem Inspektionsmodul (16) über zumindest ein weiteres Rad (24, 25) an das weitere Rad (23) gebracht wird.

8. Verfahren nach einem der vorhergehenden Verfahrensansprüche, **dadurch gekennzeichnet, dass** zur Schaffung einer Leerstelle für das erneut zu inspizierende Behältnis (12) das im ersten Rad (21) befindliche Behältnis (12) nicht an dem ersten Übergabepunkt (41) übergeben wird, sondern wieder zurück in Richtung der Zuführung (14) bewegt wird.

9. Verfahren nach einem der vorhergehenden Verfahrensansprüche, **dadurch gekennzeichnet, dass** abhängig von der Inspektion in dem Inspektionsmodul (16) eine Ablage des inspizierten Behältnisses (12) in einer der Ablagen (31-37) erfolgt.

10. Verfahren nach einem der vorhergehenden Verfahrensansprüche, **dadurch gekennzeichnet, dass** zumindest eine Leerstelle für ein erneut zu inspizieren des Behältnis (12) geschaffen wird bei laufendem, vorzugsweise kontinuierlichem Betrieb des ersten Rades (21).

## Claims

1. Device for inspecting containers (12), comprising at least one inspection module (16) for inspecting containers (12), at least one feeder (14) for the containers (12) to be inspected, at least one first wheel (21) for withdrawal and further conveyance of the containers (12) fed by the feeder (14), at least one further wheel for feeding the containers (12) to the inspection module (16), wherein the first wheel (21) feeds containers (12) to the further wheel (23), **characterized in that** at least one controller (40) is provided to control the transfer of at least one container (12) from the first wheel (21) to the further wheel (23) at a transfer point (41) in such a way that in the case of a container (12) having to be re-inspected a transfer of a container (12) from the first wheel (21) to the further wheel (23) is omitted at least once.

2. Device as claimed in claim 1, **characterized in that** a container (12) to be re-inspected by the inspection module (16) is fed via at least one further wheel (24, 25) to the further wheel (23).

3. Device as claimed in one of the preceding claims, **characterized in that** a pre-inspection is performed in the first wheel (21).

4. Device as claimed in one of the preceding claims, **characterized in that** the controller (40) controls the withdrawal of the fed containers (12) from the feeder (14) in such a way that the withdrawal of at least one container (12) is omitted if previously a transfer of at least one container (12) to the further wheel (23) was omitted.

5. Method for inspecting containers (12), wherein a feeder (14) feeds containers (12) to a first wheel (21), wherein the first wheel (21) is preferably moved continuously and feeds withdrawn containers (12) to a further wheel (23) which delivers the fed containers to an inspection module (16) which inspects containers (12), **characterized in that** in the case of a re-inspection of a container (12) already inspected, a transfer from the first wheel (21) to the further wheel (23) is omitted to provide at least one free space for the container (12) to be re-inspected.

6. Method as claimed in the preceding method claim, **characterized in that** a pre-inspection is performed in the first wheel (21) and/or a transfer to the further wheel (23) is effected depending on the pre-inspection.

7. Method as claimed in one of the preceding method claims, **characterized in that** a container (12) to be re-inspected by the inspection module (16) is brought to the further wheel (23) via at least one further wheel (24, 25).

8. Method as claimed in one of the preceding method claims, **characterized in that** for providing an open space for the container (12) to be re-inspected, the container (12) present in the first wheel (21) is not transferred at the first transfer point (41) but is moved back in the direction of the feeder (14).

9. Method as claimed in one of the preceding method claims, **characterized in that** depending on the inspection in the first inspection module (16) the container (12) that has been inspected is put in one of the trays (31-37).

10. Method as claimed in one of the preceding method claims, **characterized in that** at least one open space for a container (12) to be re-inspected is provided during operation, preferably continuous operation of the first wheel (21).

## Revendications

1. Dispositif d'inspection de récipients (12) comprenant au moins un module d'inspection (16) permettant d'inspecter des récipients (12), au moins une alimentation (14) des récipients (12) à inspecter, au moins une première roue (21) permettant de prélever et de transporter ultérieurement le récipient (12) acheminé par l'alimentation (14), au moins une autre roue (23) permettant d'acheminer les récipients (12) vers le module d'inspection (16), la première roue (21) acheminant des récipients (12) vers l'autre roue (23), **caractérisé en ce qu'**il est prévu au moins une commande (40) qui commande un transfert d'au moins un récipient (12) de la première roue (21) vers l'autre roue (23) au niveau d'un point de transfert (41) de sorte que, dans le cas d'un récipient (12) devant être à nouveau au moins une fois un transfert d'un récipient (12) de la première roue (21) vers l'autre roue (23) ne soit pas effectué.

2. Dispositif conforme à la revendication 1, **caractérisé en ce qu'**un récipient (12) devant à nouveau être inspecté est conduit par le module d'inspection (16) vers l'autre roue (23) par l'intermédiaire d'au moins une autre roue (24, 25).

3. Dispositif conforme à l'une des revendications précédentes, **caractérisé en ce qu'**une pré-inspection est effectuée dans la première roue (21).

4. Dispositif conforme à l'une des revendications précédentes, **caractérisé en ce que** la commande (40) commande le prélèvement des récipients (12) acheminés par l'alimentation (14) de sorte qu'un prélèvement d'au moins un récipient (12) ne sois pas effectué lorsqu'auparavant un transfert d'au moins un récipient (12) sur l'autre roue (23) n'a pas été effectué.

5. Procédé d'inspection de récipients (12) selon lequel une alimentation (14) conduit des récipients (12) à une première roue, la première roue (21) se déplaçant de préférence en continu et des récipients (12) prélevés sont conduits à une autre roue (23) qui délivre les récipients (12) acheminés à un module d'inspection (16) des récipients (12), **caractérisé en ce qu'**en cas d'une nouvelle inspection d'un récipient (12) déjà inspecté un transfert de la première roue (21) à l'autre roue (23) n'est pas effectué pour pouvoir disposer d'au moins un emplacement libre pour le récipient (12) devant être à nouveau inspecté.

6. Procédé conforme à la revendication de procédé précédentes, **caractérisé en ce que** dans la première roue (21) est effectuée une pré-inspection et/ou un transfert sur l'autre roue (23) est effectué en fonction de la pré-inspection.

7. Procédé conforme à l'une des revendications de procédé précédentes, **caractérisé en ce qu'**un récipient (12) devant être à nouveau inspecté est acheminé vers l'autre roue (23) par le module d'inspection (16) par l'intermédiaire d'au moins une autre roue (24, 25).

8. Procédé conforme à l'une des revendications de procédé précédentes, **caractérisé en ce que** pour pouvoir disposer d'un emplacement libre pour le récipient (12) devant être à nouveau inspecté, le récipient (12) se trouvant dans la première roue (21) n'est pas transféré au niveau du premier point de transfert (41) mais déplacé en direction de l'alimentation (14).

9. Procédé conforme à l'une des revendications de procédé précédentes, **caractérisé en ce qu'**en fonction de l'inspection dans le module d'inspection (16) un dépôt du récipient (12) inspecté dans un dépôt (31, 37) est effectué.

10. Procédé conforme à l'une des revendications de procédé précédentes, **caractérisé en ce qu'**au moins un emplacement libre pour un récipient (12) devant être à nouveau inspecté est mis à disposition lors du déplacement de la première roue (21) de préférence selon un mode de fonctionnement continu.
